# EUROPEAN PATENT APPLICATION

(11) **EP 4 357 861 A1**
(43) Date of publication of application: **24.04.2024**
(21) Application number: 23204180.6
(22) Date of filing: 17.10.2023
(51) Int. Cl.: G04G 17/08

(54) **PERSONAL DIGITAL MODULE**

(30) Priority: 17.10.2022 US 202263416846 P
(71) Applicant: Wilcox Industries Corp., Newington, NH 03801 (US)
(72) Inventor: TEETZEL, James W., Newington, NH 03801 (US); LEMIRE, Gary M., Newington, NH 0380 (US); REICHL, Mathew A., Portsmouth, NH 0380 (US)
(74) Representative: FRKelly

(57) **Abstract**

A personal digital module comprises a housing and a processor with an associated computer-readable memory disposed within the housing. The memory is operably coupled to the processor and encoded with executable instructions. A human-viewable display operably is coupled to the processor and disposed within the housing. A connection interface is disposed on the housing and is configured for detachable and interchangeable attachment of first device and a second device. The processor is configured, upon execution of the executable instructions, to perform a first function associated with the first device when the personal digital module is attached to the first device and to perform a second function associated with the second device when the personal digital module is attached to the second device.

## Description

### CROSS REFERENCE TO RELATED APPLICATION

This application claims the priority benefit of U.S. provisional application no. 63/416,846 filed October 17, 2022. The aforementioned application is incorporated herein by reference in its entirety.

### BACKGROUND

The present invention relates to a personal digital module comprising a computer-based information handling system that has customizable screens configurable by the user through a wireless interface, such as a Bluetooth application, via a mobile device, such as a cell phone, or via a laptop or desktop computer. The personal digital module can be decoupled from a watch base module and moved from device to device utilizing a common, locking, plug/socket combination and any device-specific, preprogrammed preferences are automatically applied when paired.

The personal digital module can be used as a controlling device or as a simple display. Each device as well as the personal digital module itself can be configured to only allow access through facial recognition and/or biometric measurements from the watch base sensors.

### SUMMARY

In one aspect, a personal digital module comprises a housing and a processor with an associated computer-readable memory disposed within the housing. The memory is operably coupled to the processor and encoded with executable instructions. A human-viewable display operably is coupled to the processor and disposed within the housing. A connection interface is disposed on the housing and is configured for detachable and interchangeable attachment of first device and a second device. The processor is configured, upon execution of the executable instructions, to perform a first function associated with the first device when the personal digital module is attached to the first device and to perform a second function associated with the second device when the personal digital module is attached to the second device.

In a more limited aspect, the processor is configured, upon execution of the executable instructions, to receive a first set of user preferences from the first device when the personal digital module is attached to the first device and to receive a second set of user preferences from the second device when the personal digital module is attached to the second device.

In another more limited aspect, the human-viewable display further comprises a touch screen.

In another more limited aspect, the first device is a watch base module wearable on a wrist of a user.

In another more limited aspect, the watch base module comprises one or more biometric sensors for collecting biometric data from the user and the executable instructions comprise an authentication module configured to biometrically authenticate the user.

In another more limited aspect, the personal digital module further comprises a wireless communications interface between the personal digital module and the watch base module configured to transmit data from the one or more biometric sensors to the personal digital module.

In another more limited aspect, the personal digital module is configured to monitor for presence of the user at periodic intervals during operation of the first or second device.

In another more limited aspect, the personal digital module is configured to biometrically authenticate the user at periodic intervals during operation of the first or second device.

In another more limited aspect, the one or more biometric sensors are selected from the group consisting of a camera, an ECG sensor, and an EDA sensor.

In another more limited aspect, the watch base module includes an annular receptacle configured to detachably receive the connection interface, the annular receptacle having one or more pivoting lock bars engaging complementary slots on the connection interface.

In another more limited aspect, the one or more lock bars are manually actuatable for detaching the personal digital module from the watch base module.

In another more limited aspect, the second device is selected from the group consisting of a fire control system, a parachutist navigation system, and a helmet mounting system.

In another more limited aspect, the second device is a fire control system and the personal digital module is configured to display one or more indicia associated with the fire control system, wherein the one or more indicia are selected from the group consisting of battery power indicia, range to target indicia, laser status indicia, reticle indicia, zoom magnification indicia, and any combination thereof.

In another more limited aspect, the second device is a parachutist navigation system comprising a digital compass, an altimeter, and a global satellite positioning receiver, and the personal digital module is configured to selectively provide a graphical user interface representative of orientation based on data received from the digital compass, altitude based on data received from the altimeter, and location based on data received from the global satellite positioning receiver.

In another more limited aspect, the second device is a helmet mounting system.

In another more limited aspect, the personal digital module is operable to control a function of a helmet-mounted device attached to the helmet mounting system.

In another more limited aspect, the helmet mounting system includes an IFF beacon, and wherein the personal digital module is operable to control operation of the IFF beacon.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of the personal digital module attached to the watch base module.
FIG. 2 is an isometric view of the personal digital module and the watch base module separated to expose the common receiver socket.
FIG. 3 is an enlarged isometric view of the personal digital module.
FIG. 4 is an exploded isometric view of the personal digital module.
FIG. 5 is an isometric view of the watch base module.
FIG. 6 is an exploded isometric view of the watch base module showing the spring-loaded locking mechanism, biometric module, and audio/visual flex PCB.
FIG. 7 is a view showing the common interface between modules.
FIG. 8 illustrates the personal digital module interfacing with a first exemplary device (i.e., fire control system).
FIG. 9 illustrates the personal digital module interfacing with a second exemplary device (i.e., parachutist navigation system).
FIG. 10 is an enlarged view of the region 10 appearing in FIG. 9.
FIG. 11 illustrates the personal digital module interfacing with a third exemplary device (i.e., helmet mounting system).
FIG. 12 is an enlarged view of the region 12 appearing in FIG. 11.
FIG. 13 is a block diagram depicting the personal digital module interfacing with a watch base module, fire control system, parachutist navigation system, and a helmet mounting system.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention cover such modifications and variations as come within the scope of the appended claims and their equivalents.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

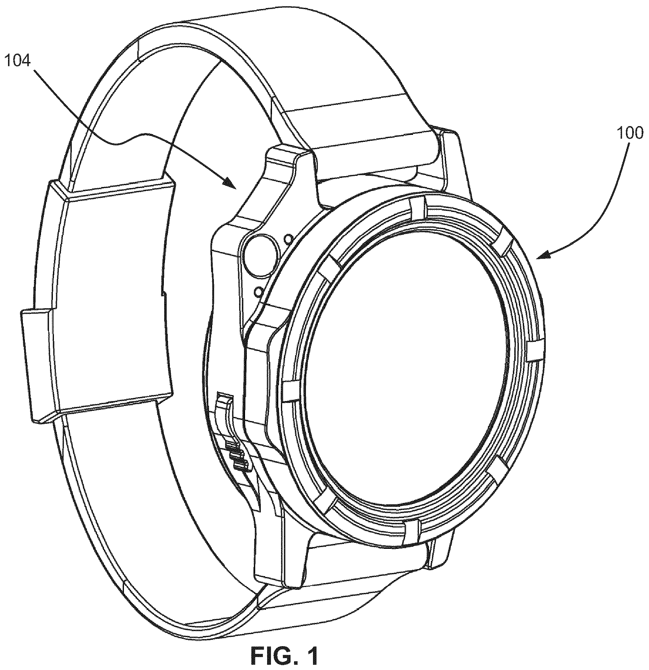

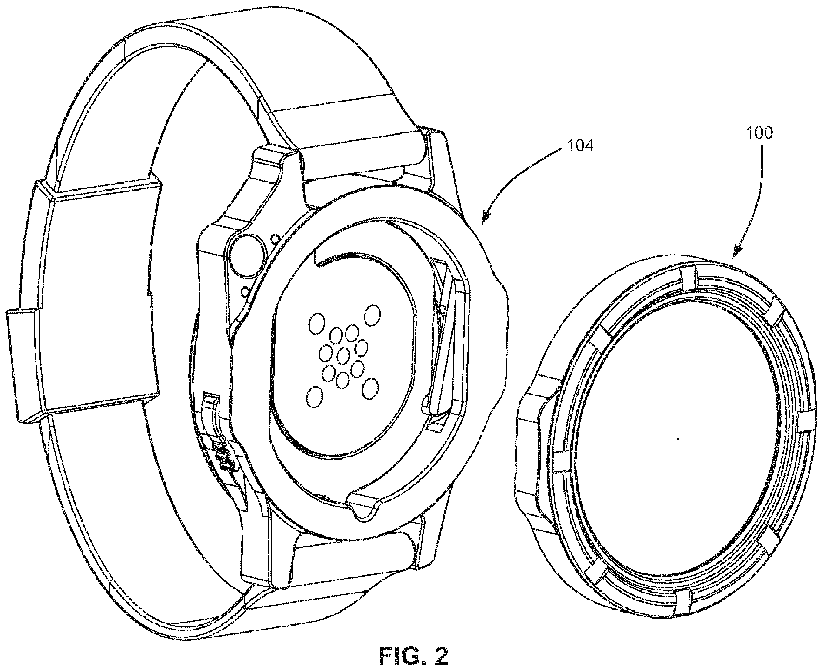

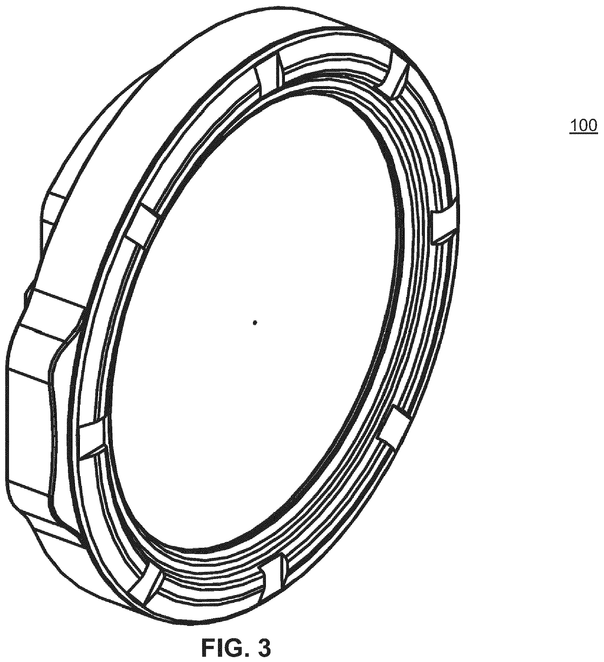

Referring to FIG. 1, there appears a personal digital module **100** attached to a base module **104,** which is similar in form factor to a traditional wrist watch and will be referred to herein as a watch base module. FIG. 2 illustrates the personal digital module removed from the watch base module **104.** An enlarged view of the personal digital module **100** appears in FIG. 3.

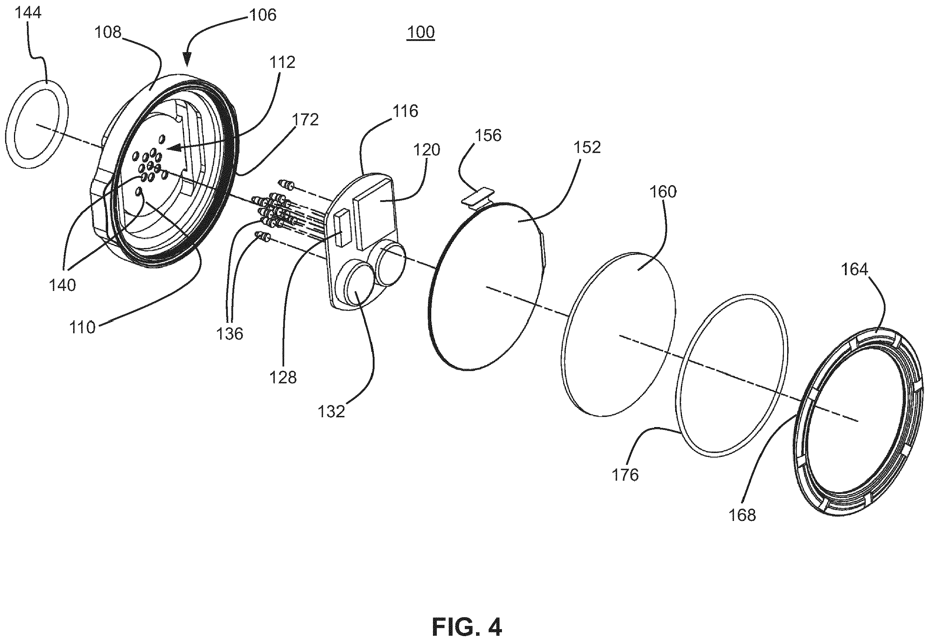

Referring now to FIG. 4, there is shown an exploded view of the personal digital module **100.** The personal digital module **100** includes a base **106** having peripheral wall **108** and a rear wall **110** which cooperate to define a cavity **112.**

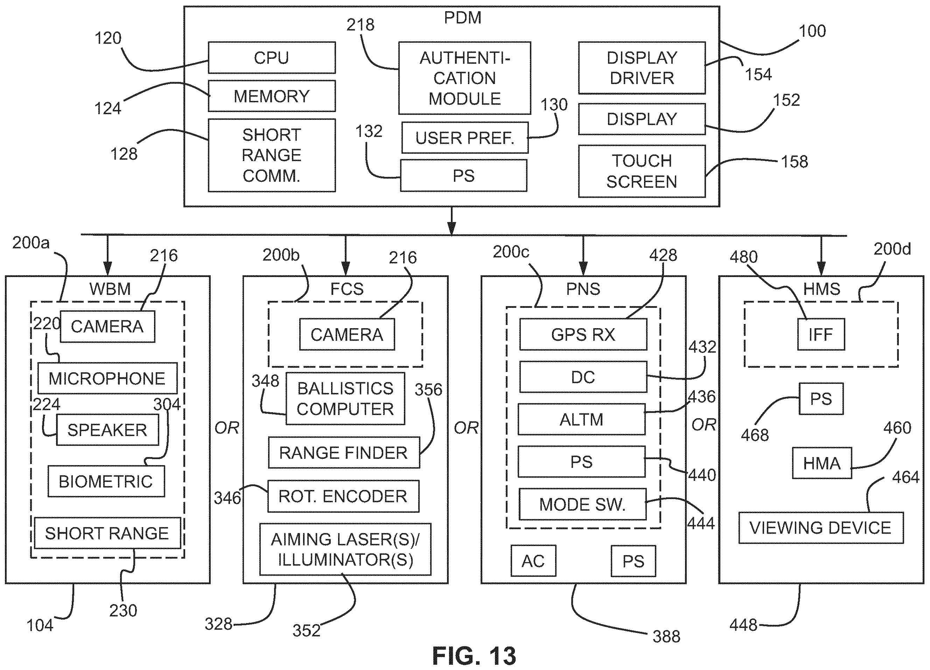

A main printed circuit board **116** is received within the cavity **112** and includes a processor **120** and an associated computer readable memory **124** (see FIG. 13) and a short-range radio frequency (RF) communications module **128.**

The processor **120** is configured to execute computer programs, applications, methods, processes, or other software to perform embodiments described in the present disclosure. The processor may include one or more integrated circuit, microchip, microcontroller, microprocessor, central processing unit (CPU), graphics processing unit (GPU), digital signal processor (DSP), field programmable gate array (FPGA), or other circuits suitable for executing instructions or performing logic operations.

The memory **124** provides storage of instructions and data for programs executing on the processor **120.** The memory **124** is typically semiconductor-based memory as would be generally understood by persons skilled in the art, such as read-only memory (ROM), programmable read-only memory (PROM), erasable programmable read-only memory (EPROM), electrically erasable programmable read-only memory (EEPROM), flash EEPROM or other flash memory, and so forth and is intended to encompass multiple memories, such as a main memory and an auxiliary memory, if desired.

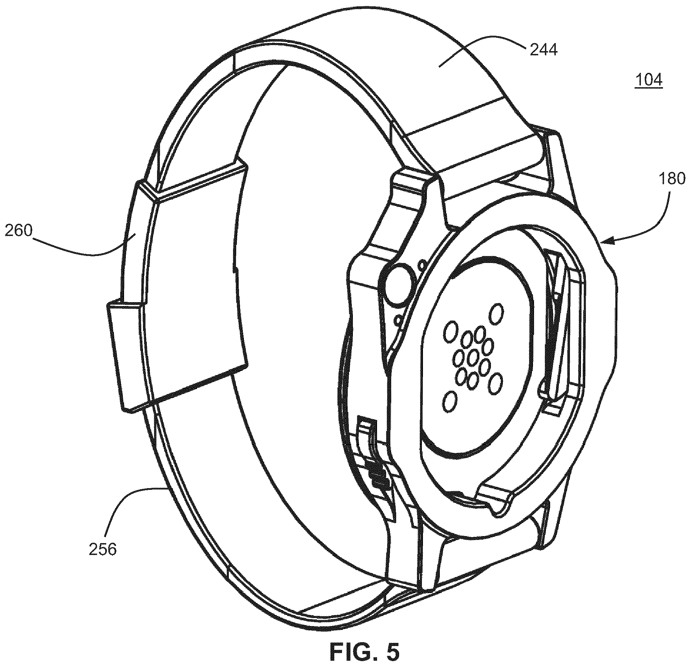

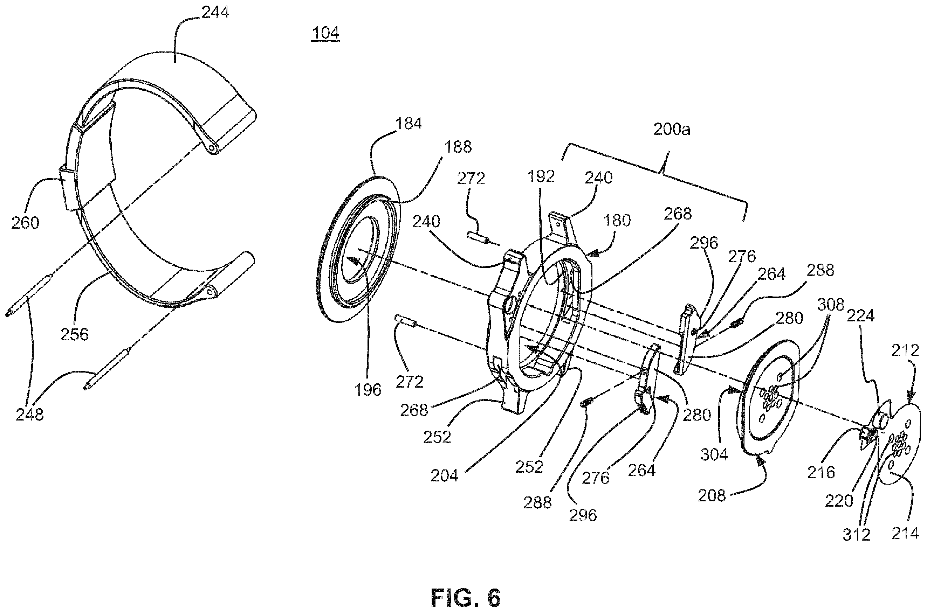

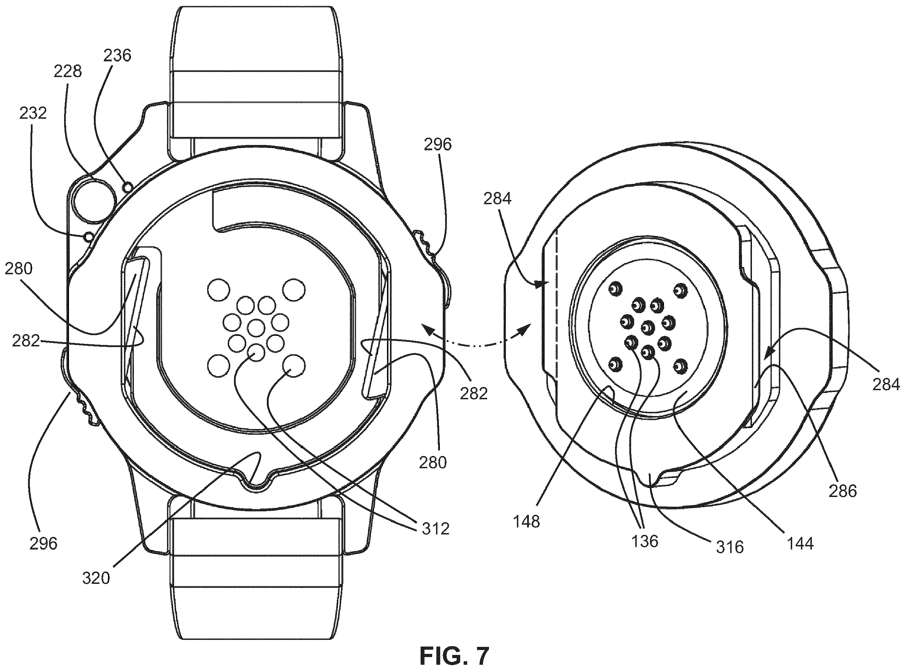

Referring now to FIGS. 5-13, and with continued reference to FIGS. 1-4, the processor **120** is programmed to implement a mode of operation based on input received from a device to which is it attached, for example, one of the devices **104, 328, 388,** and **448** as described below. In addition, a user preferences module **130,** which may be implemented as a module in the memory **124,** is configured to automatically communicate under the control of the processor **120** with a device to which is it is attached to store user preferences concerning one operational settings of the attached device, wherein the attached device is configured to receive the user preferences from the personal digital module **100.** The term "user preferences" means data specified by a user that is specific to a user or a customizable configuration representative of how a particular user chooses to configure the attachable devices while utilizing the apparatus as described herein.

The short-range RF communications module **128** receives and sends RF signals and includes circuitry configured to establish a short-range wireless link via one or more communications protocols, such as Bluetooth, Wi-Fi, Near Field Communication (NFC), or any other wireless pairing protocol usable for short-range communication.

One or more batteries **132** are disposed on the main board **116** and supply power to the components of the personal digital module **100.** In embodiments, the one or more batteries include one or more rechargeable batteries.

A plurality of power and data contact pins **136** are operably electrically couples to the main board **116** and extend through openings **140** in the rear wall **110.** In embodiments, the contact pins **136** are spring-loaded contact pins, e.g., pogo pins. An O-ring **144** is disposed within an annular groove or channel **148** surrounding the openings **140** and the pins **136** to protect the contacts **136** and openings from moisture/contamination.

A display **152** is disposed over the main board **116** in the base **106** and is operably coupled to the main board via a display connector **156.** In embodiments, the display is a liquid crystal display (LCD), light-emitting diode (LED) display or organic light-emitting diode (OLED) display. Display driver circuitry **154** is configured to drive the display panel **152.** In embodiments, the display **152** further includes a touch screen overlay **158** for providing user input to the processor **120.** The display **152** is configured to display one of a plurality of user interfaces, wherein the user interface to be displayed is selected automatically according to the device to which is attached and/or the user preferences.

In embodiments, the display **152** has a brightness and/or contrast control, e.g., wherein the screen is dimmable to reduce eye splash when used in nighttime operations, wherein brightness and contrast can be increased for use in bright light conditions, and so forth. In embodiments, the screens brightness and/or contrast is manually adjustable, e.g., via a menu or other user interface feature on the display **152.** In certain embodiments, a sensor **162,** such as a photosensor, is provided to detect a level of ambient or background light and automatically adjust the brightness and/or contrast of the display **152** based on the ambient brightness level. In this manner an optimal brightness and/or contrast of the display **152** is ensured for various ambient lighting conditions.

A transparent display window **160** is disposed over the display **152.** A bezel **164** engages the personal digital module base **106** via threads **168** which engage complementary threads **172** in the personal digital module base **106.** A compression O-ring seal **176** is disposed intermediate the bezel **164** and the window **160** to provide a sealing interference against water, moisture, or other contamination entering the interior of the personal digital module **100.**

Referring now to FIGS. 5-7, the watch base module **104** includes a body **180** having a threaded rear cover **184** attached thereto with external threads **188** which engage complementary internal threads **192.** The rear cover **184** includes an opening **196** therethrough. The body **180** defines an interior compartment **204** and includes retentions and release features as will be described below to define a first common receiver socket or receptacle **200a** for releasably attaching the personal digital module **100.**

A biometrics sensor module **208** and an audio/visual (A/V) circuit board **212** are disposed within the interior **204.** In embodiments, the A/V circuit board **212** comprises a flexible film substrate **214.** A camera **216** is disposed on the A/V circuit board **212.** In embodiments, the personal digital module **100** includes a biometrics or authentication module **218** stored in the memory **124** and executable by the processor **120** for transitioning the personal digital module **100** from a locked state to an unlocked state. In embodiments, the biometrics module **218** includes facial recognition software configured to analyze one or more images of the user acquired by the camera **216** and to perform facial recognition techniques to detect an authorized user(s) of the personal digital module **100** having digital representations such as image files, e.g., JPEG files, GIF files, etc., stored in the memory **124.** It will be recognized that other biometric identification means may also be used, such as iris recognition, fingerprint recognition, or voice recognition techniques using pre-stored digital representations from an authorized user of the personal digital module **100.** In embodiments, user identification may be performed using input from the biometrics sensor module **208.**

A microphone **220** and an audio transducer **224** (e.g., speaker) are disposed on the A/V circuit board **212** to provide an audio interface for the personal digital module **100.** The camera **216,** microphone **220,** and speaker **224** are aligned with openings or ports **228, 232,** and **236,** respectively, formed in the body **180.**

The body **180** includes a pair of spaced apart upper struts **240** engaging a first band strap **244** via a spring bar pin **248** and a pair of spaced apart lower struts **252** engaging a second band strap **256** via a spring bar pin **248.** A buckle or clasp **260** is provided to releasably secure the free ends of the first and second band straps **244, 256.**

Lock bars **264** are pivotally attached to the body **180** via pivot pins **272** passing through openings **274** in the body **180** and openings **276** in the lock bars **264.** The lock bars **264** are pivotally received within lock bar receptacles **268.** The lock bars **264** include a blade portion **280** which releasably engages a corresponding slot **284** on the personal digital module **100.** Ramped or inclined edges **282** on the lock bar blade portions **280** cooperate with ramped or inclined edges **286** on the personal digital module connection interface portion to facilitate movement of the lock bars **264** into the slots **284.**

Tension springs **288** are captured between the lock bars **264** and the body **180** and bear against the blade portions **280** to urge the blade portions **280** into the slots **284** when the personal digital module **100** is attached to the watch base module **104.**

The lock bars **264** further include lever portions **296** which are manually accessible through the openings **268** to manually pivot the lock bars **264** against the urging of the springs **288** to retract the blade portions **280** into the slots **284** when it is desired to remove the personal digital module **100** from the watch base module body **104.**

Physiological electrodes/sensors **304** on the biometric sensor module **208** extend through the opening **196** and engage the skin of the user when the user is wearing the watch base module **104** for measuring one or more physiological biomarkers of the user. In embodiments, the electrodes/sensors **304** include electrodermal activity/galvanic skin response (EDA/GSR) for measuring the EDA of the wearer. In embodiments, the electrodes/sensors **304** include electrocardiogram (ECG) sensors for sensing the cardiac rhythm/electrical activity of the wearer. In embodiments, the sensor output is sent to the processor **120** and compares to digital representations stored in the memory **124** to detect an authorized user(s) of the personal digital module **100** using recognition techniques. A short-range RF transceiver module **230** is in communication with the short-range RF communications module **128** to provide a wireless communications interface between the watch base module **104** and the personal digital module **100** when the personal digital module is removed from the watch base module interface socket **200a.**

In embodiments, the personal digital module **100** is configured to monitor for the presence of biometric data from the user via the biometrics module **304.** In embodiments, the biometric data can be monitored, e.g., at periodic intervals, for one or more biometric features associated with the user. In this manner, the personal digital module **100** may be configured to monitor for the presence of the user. In embodiments, the user is re-authenticated at periodic intervals. In embodiments, when the biometric data from the biometric module **304** correlates with the stored biometric data in the authentication module **218,** the user is re-authenticated and the user is allowed continued access to the personal digital module **100.** When biometric data from the biometric module **304** is either not received, e.g., because the personal digital module **100** is out of range of the short-range communications module **230** of the watch base module **104** or because user is no longer wearing the watch base module **104,** or, if the biometric data received from the watch base module **104** does not correlate with the stored biometric data in the authentication module **218,** access to the personal digital module **100** is denied, e.g., by locking the device.

Contact pads **308** on the biometric sensor module **208** are in electrical communication with contact pads **312** on the A/V module **212,** which, in turn engage the pins **136** on the personal digital module **100** when the personal digital module **100** is attached to the watch base module **104.** An alignment lug **316** engages a complementary alignment notch **320** to provide proper rotational orientation of the personal digital module **100** with respect to the watch base module **104.**

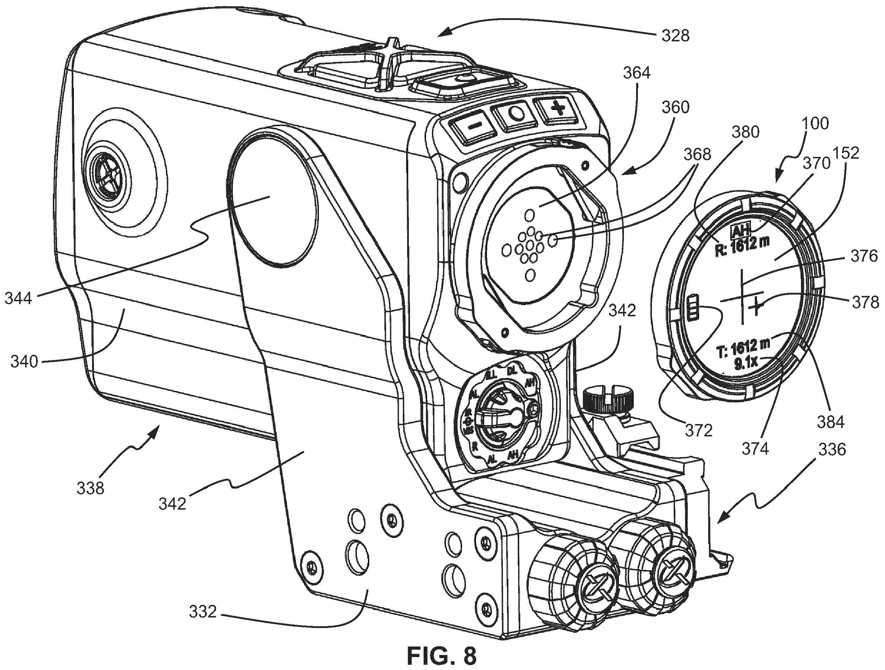

Referring now to FIG. 8, there is shown an exemplary fire control system **328** configured to receive the personal digital module **100,** which provides a modular, removable human-viewable user interface for the fire control system **328** in lieu of an integral or built in fire control system display screen. The fire control system **100** includes a base **332** having a rail clamp assembly **336** for detachably attaching the fire control system **100** to an accessory mounting rail of a weapon, such as a rifle, grenade launcher, hand held rocket or missile delivery systems, and others.

The fire control system **328** further includes a main body **338** having a housing **340.** The main body **338** is pivotally supported between upstanding struts or arms **342.** The main body is pivotable about a pivot point **344.** A rotary encoder **346** is provided to determine the relative angle between the main body **338** and the base **332.**

The fire control system **328** includes a ballistics computer **348** and one or more aiming or pointing lasers **352.** In embodiments, the fire control system **328** includes an optical range finder **356** for determining a distance to a selected target. In embodiments, the optical range finder may be omitted and the distance to a desired target may be determined through other means, such as an external range finder or other range determination or estimation method(s).

After the distance to the target is determined and input, either by an onboard range finder **356** or otherwise input by the user, the ballistics computer **348** performs a ballistics calculation to calculate the appropriate angle of trajectory of the weapon relative to a line of sight between the user and the target. In embodiments, the ballistics computation is made based on the trajectory data for the particular firearm or artillery and/or particular munition/projectile with which the fire control system **328** is being used. In embodiments, the trajectory data for a plurality of firearms or artilleries and/or munition/proj ectile types may be stored in a memory associated with the fire control system **328** and ballistics computer **348** and/or in the memory **124** of the personal digital module **100.** In embodiments, ballistics computations are made based on the distance to the target and one or more environmental factors such as wind speed and direction, temperature, barometric pressure, among others.

In operation, once the trajectory is calculated, the main body **338** is rotated about the pivot axis **344** until the relative angle between the base **328** (and thus the bore of the barrel of the weapon) is such that aligning the laser **352** with the target will cause the weapon to be positioned at the proper angle for firing a projectile so that the path of the projectile will substantially intersect with the position of the target. In certain embodiments the main body **328** is configured to be manually rotated until the calculated trajectory distance corresponds to the distance determined by the range finder and/or other range determination method. Alternatively, the fire control system **328** further includes a motorized drive system (not shown) configured to rotate the main body **328** under programmed control to the calculated trajectory angle.

The fire control system **328** includes a personal digital module interface **360** which defines common receiver socket **200b** for personal digital module **100.** The interface **360** includes releasable mounting features which are as described above by way of reference to the common receiver socket **200a.** The interface **360** includes a fire control system circuit board **364** having contact pads **368** which contact the electrical contact pins **136** on the personal digital module **100** to operably couple the personal digital module **100** to the parachutist navigation system **388.**

In the illustrated embodiment, the display **152** is shown with an exemplary human viewable interface comprising, in certain embodiments, an indicium **370** which depicts a "laser on" warning to the user. In certain embodiments, an indicium **372** is displayed, which is representative of the battery level. In certain embodiments, an indicium **374** is displayed, which is representative of the camera optics zoom level. In certain embodiments, a main reticle indicium **376** is displayed, which represents an aim point that is bore sighted to the associated weapon. In certain embodiments, a disturbed reticle indicium **378** is displayed, representing a modified aim point that is calculated based upon the weapon, munition, environment, etc.

In certain embodiments, the distance to the target, i.e., as determined using the rangefinder **356** or via other apparatus or method, is output to the display **152** as range to target indicium **380.** The distance to target for which the fire control system **328** is currently set based on the rotational angle of the main body **338** in relation to the base **332** is displayed as an indicium **384.** The target setting distance displayed as the indicium **384** scrolls though the target setting distance based on the angular information from the encoder **346** as the main body **338** is rotated. In operation, the user rotates the main body **338** until the value displayed for the range indicium **384** matches or substantially matches the distance as determined by the range finder **356** or other apparatus or method and displayed as indicium **384.** It will be recognized that indicia representative of other information, as well as other configurations of display indicia on the display **152,** are also contemplated.

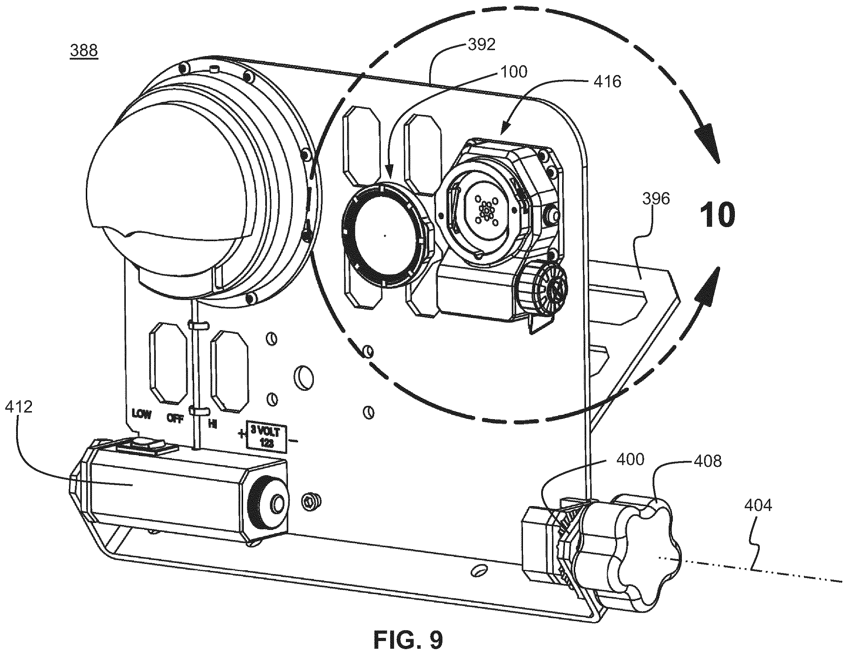

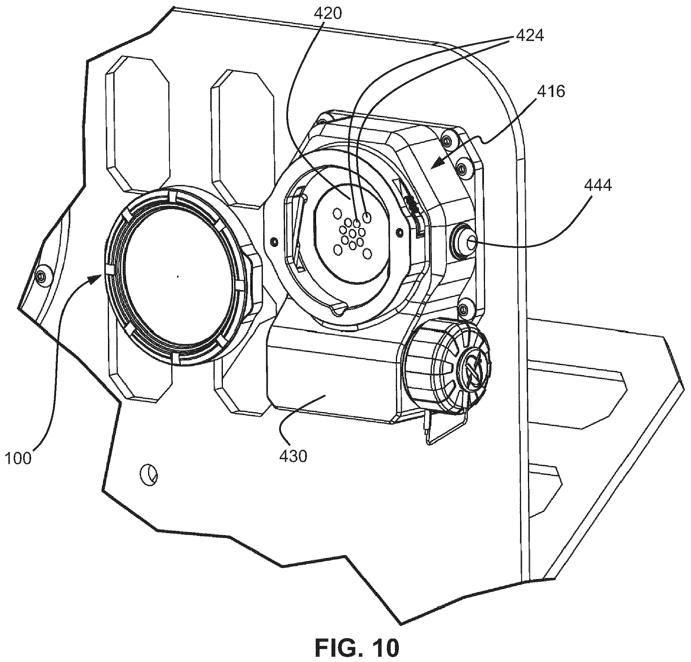

Referring now to FIGS. 9 and 10, there is shown an exemplary parachutist navigation system **388** which is configured to receive the personal digital module 100, which provides a modular, removable human-viewable user interface for the parachutist navigation system **388** in lieu of a separate GPS unit or mobile device such as personal digital assistant, smart phone, or the like.

The parachutist navigation system **388** includes an instrument board **392** and a back plate **396** attached to the instrument board **392** via a hinge **400** defining a pivot axis **404.** The back plate **396** is configured to attached to a garment or parachute harness worn by the user, e.g., on the chest or torso of the user. During operation, the instrument board **392** is pivoted to a viewable position, e.g., once the parachutist is under the parachute canopy. A knob **408** is tightenable by the user to secure the instrument board **392** in the viewable position. In embodiments, a power supply **412** is provided on the instrument board **392** to operate onboard components such as a heating element or backlight (not shown) for the instruments or instrument compartments. In embodiments, an analog compass **414,** such as a liquid filled, ball-type compass, is also provided on the instrument board **392.**

A personal digital module interface **416** is disposed on the instrument board **392** and defines a common socket/receiver **200c** for the personal digital module **100.** The interface **416** includes releasable mounting features which are as described above by way of reference to the common receiver socket **200a.** The interface **416** includes a parachutist navigation system circuit board **420** having contact pads **424** which contact the electrical contact pins **136** on the personal digital module **100** to operably couple the personal digital module **100** to the parachutist navigation system **388.**

The interface **416** includes a satellite-based positioning system receiver **428.** The satellite-based positioning system receiver **428** is advantageously implemented using Global Positioning System (GPS), although other global or regional navigation satellite systems, such as Global Navigation Satellite System (GLONASS), are also contemplated. The interface unit **416** also includes an electronic or digital compass **432** for indicating a direction in which the unit **416** is pointing and an altimeter **436.**

A battery compartment **430** contains a power supply **440** for powering the components of the interface unit **416** and a mode select switch **444** is provided for cycling the between global positioning mode, compass mode, and altimeter mode, wherein the human viewable output on the display **152** changes in accordance with the selected mode.

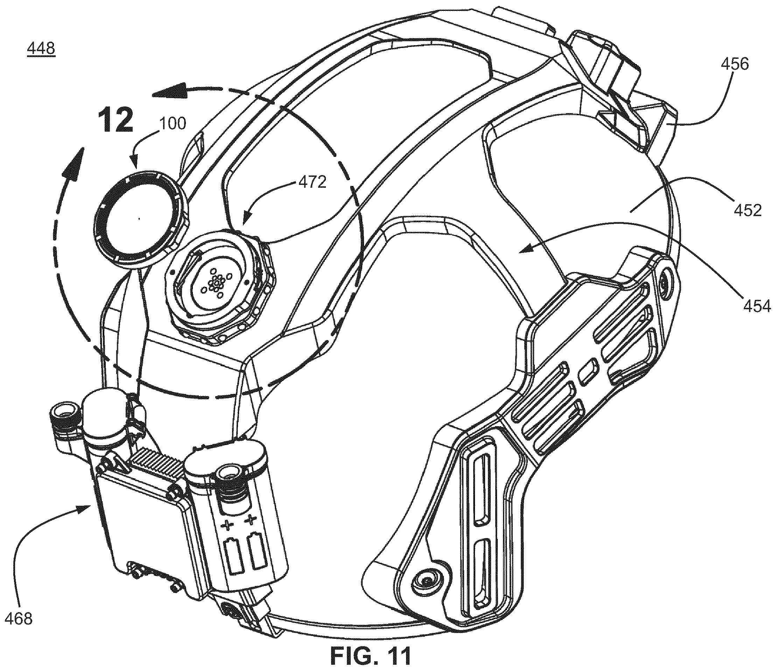

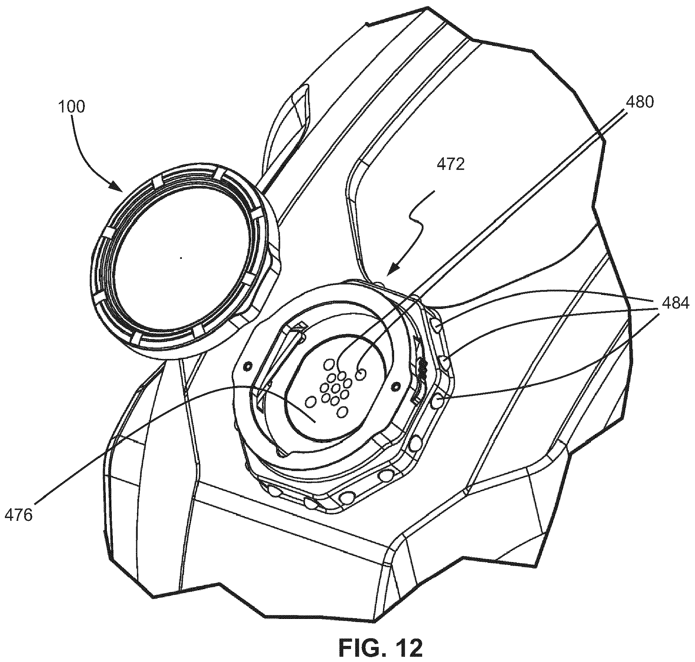

Referring now to FIGS. 11 and 12, there is shown an exemplary helmet mount system **448** which is configured to receive the personal digital module **100,** which is configured to function as the CPU or controller for devices contained in or accessed by the helmet system **448.**

The helmet mount system **448** includes a helmet **452** having an accessory interface assembly **454.** In embodiments, the accessory interface assembly **454** is configured to provide mechanical connection of accessory devices to the helmet **452** as well as electrical and/or electronic connections for power, data, and/or control signals.

The helmet mount system **448** includes a front shroud **456** assembly configured to receive a helmet mount assembly **460.** The helmet mount assembly **460,** in turn, is detachably coupled to a viewing device **464.** The viewing device may be a monocular or binocular camera or optical device, such as a night vision device, thermal camera, or the like.

The helmet mount system **448** further includes a remote power supply or battery box **468** mounted at the rear of the helmet mount system **448.** The power supply **468** is configured to provide electrical power to one or more connected devices via the helmet mount system **448.**

A personal digital module interface **472** is disposed on the helmet mount system **448** and defines a common socket/receiver **200d** for the personal digital module **100.** The interface **472** includes releasable mounting features which are as described above by way of reference to the common receiver socket **200a.** The interface **472** includes an identification friend or for (IFF) circuit board **476** having contact pads **480** which contact the electrical contact pins **136** on the personal digital module **100** to operably couple the personal digital module **100** to the helmet mount system **448** and one or more attached devices.

The interface **472** further includes IFF module **480** comprising an array of emitters **484** for covertly identifying the wearer as friendly or "blue force" personnel. In embodiments, the IFF array comprises emitters of a plurality of wavelengths selectable via the touchscreen input device **158.** In embodiments, the IFF module **480** operated as a flashing or strobe beacon. Exemplary frequency spectra of the emitters **484** include thermal, near infrared (NIR), short wave infrared (SWIR), and/or white emitters. In embodiments, the emitters **484** comprise light emitting diodes (LEDs). In embodiments, the emitters **484** comprise laser diodes. When operated in thermal or SWIR modes, it emits no visible signature and is undetectable by conventional night vision equipment.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A personal digital module, comprising:
a housing;
a processor and an associated computer-readable memory disposed within the housing, the memory operably coupled to the processor and encoded with executable instructions;
a human-viewable display operably coupled to the processor and disposed within the housing;
a connection interface disposed on the housing and configured for detachable and interchangeable attachment of a first device and a second device;
wherein the processor is configured, upon execution of the executable instructions, to perform a first function associated with the first device when the personal digital module is attached to the first device and to perform a second function associated with the second device when the personal digital module is attached to the second device.

2. The personal digital module of claim 1, wherein the processor is configured, upon execution of the executable instructions, to receive a first set of user preferences from the first device when the personal digital module is attached to the first device and to receive a second set of user preferences from the second device when the personal digital module is attached to the second device.

3. The personal digital module of claim 1 or claim 2, wherein the human-viewable display further comprises a touch screen.

4. The personal digital module of any of the preceding claims, wherein the first device is a watch base module wearable on a wrist of a user.

5. The personal digital module of claim 4, further comprising:
said watch base module comprising one or more biometric sensors for collecting biometric data from the user; and
said executable instructions comprising an authentication module configured to biometrically authenticate the user.

6. The personal digital module of claim 5, further comprising a wireless communications interface between the personal digital module and the watch base module configured to transmit data from the one or more biometric sensors to the personal digital module.

7. The personal digital module of claim 6, wherein the personal digital module is configured to monitor for presence of the user at periodic intervals during operation of the first or second device.

8. The personal digital module of claim 6, wherein the personal digital module is configured to biometrically authenticate the user at periodic intervals during operation of the first or second device.

9. The personal digital module of claim 5, wherein the one or more biometric sensors are selected from the group consisting of a camera, an ECG sensor, and an EDA sensor.

10. The personal digital module of claim 4, wherein the watch base module includes an annular receptacle configured to detachably receive the connection interface, the annular receptacle having one or more pivoting lock bars engaging complementary slots on the connection interface.

11. The personal digital module of claim 10, wherein the one or more lock bars are manually actuatable for detaching the personal digital module from the watch base module.

12. The personal digital module of any of the preceding claims, wherein the second device is selected from the group consisting of a fire control system, a parachutist navigation system, and a helmet mounting system.

13. The personal digital module of any of the preceding claims, wherein the second device is a fire control system and wherein the personal digital module is configured to display one or more indicia associated with the fire control system, the one or more indicia selected from the group consisting of: battery power indicia, range to target indicia, laser status indicia, reticle indicia, zoom magnification indicia, and any combination thereof.

14. The personal digital module of any of the preceding claims, wherein the second device is a parachutist navigation system comprising a digital compass, an altimeter, and a global satellite positioning receiver, and wherein the personal digital module is configured to selectively provide a graphical user interface representative of orientation based on data received from the digital compass, altitude based on data received from the altimeter, and location based on data received from the global satellite positioning receiver.

15. The personal digital module of any of the preceding claims, wherein the second device is a helmet mounting system.

16. The personal digital module of claim 15, wherein the personal digital module is operable to control a function of a helmet-mounted device attached to the helmet mounting system.

17. The personal digital module of claim 15, wherein the helmet mounting system includes an IFF beacon, and wherein the personal digital module is operable to control operation of the IFF beacon.
